# EUROPEAN PATENT APPLICATION

(11) **EP 1 975 562 A2**
(43) Date of publication of application: **01.10.2008**
(21) Application number: 08004820.0
(22) Date of filing: 14.03.2008
(51) Int. Cl.: G01C 21/20, G01C 21/34

(54) **Stop-off facility guidance system and stop-off facility guidance method**

(30) Priority: 29.03.2007 JP 2007089314
(71) Applicant: Aisin AW Co., Ltd., Fujii-cho Anjo-shi, Aichi 444-1192 (JP)
(72) Inventor: Kato, Kazuya, Okazaki-shi Aichi 444-8564 (JP)
(74) Representative: Kramer - Barske - Schmidtchen

(57) **Abstract**

A stop-off facility guidance system includes a time required for maintenance calculating processing device for calculating a time required for maintenance, a total time calculating processing device for calculating a total time a driver takes to visit stop-off facilities on foot and to get back to the facility at which the maintenance is undergone on foot, and a stop-off facility notification processing device for comparing the total time with the time required for the maintenance and for notifying the driver of stop-off facilities which can be visited on foot. Therefore, it is possible for the driver to predict when he/she should get back to the predetermined facility after visiting the stop-off facilities. Further, it is possible for the driver to easily determine whether the stop-off facilities should be visited before the maintenance is terminated or after the maintenance has been terminated.

## Description

### BACKGROUND OF THE INVENTION

### 1. Field of the Invention

The present invention relates to a stop-off facility guidance system and a stop-off facility guidance method.

### 2. Description of the Related Art

Traditionally, when a driver travels to a predetermined facility by a vehicle, for example, when the driver travels to undergo a vehicle maintenance by the vehicle, the driver waits in a waiting room which is built in the facility and the like until the vehicle maintenance is finished.

For example, when the driver goes to a gas station to wash the vehicle, the driver waits in a waiting room which is built in the gas station until the car wash is finished. When the driver goes to a motor vehicle repair shop to undergo the vehicle inspection and maintenance, the driver waits in a waiting room which is built in the motor vehicle repair shop until the vehicle inspection and maintenance is finished.

Further, in case that the vehicle is an electric vehicle such as a hybrid vehicle or an electric-powered vehicle, when the driver goes to a facility such as an electric station in which a battery charger is mounted or a parking area, that is, a battery charging facility by the electric vehicle, the driver waits in a waiting room which is built in the battery charging facility until the battery charge is finished.

However, when it takes a long time to finish the battery charge at the battery charging facility, it is difficult for the driver to wait until the battery charge is finished. Therefore, a vehicle, for example, which has been disclosed in Japanese Unexamined Patent Application Publication No. 2006-112932, is provided for display information of stop-off facilities in conjunction with information of battery charging facilities, so that a driver can stop at stop-off facilities such as sightseeing facilities near a battery charging facility.

### SUMMARY OF THE INVENTION

According to the conventional vehicle described above, stop-off facilities near a battery charging facility are simply displayed, so that after the driver stops at the sightseeing facilities, the driver cannot expect when the driver should be back to the battery charging facility. As a result, after the driver stops at the sightseeing facilities, the driver might come back to the battery charging facility long before the maintenance is finished or the driver might come back to the battery charging facility long after the maintenance has been finished. As described above, the convenience of the notification of the stop-off facilities should be improved.

Accordingly, to solve the problems of the conventional vehicle described above, it is an object of the present invention to provide a stop-off facility guidance system and a stop-off facility guidance method for allowing a driver, provided that a vehicle maintenance is undergone at a predetermined facility, to predict when the driver should be back to the predetermined facility after the driver visits stop-off facilities near the predetermined facility. Therefore, the convenience of the notification of the stop-off facilities is improved.

To solve the problems described above, various exemplary implementations of the principles described herein provide a stop-off facility guidance system, comprising: a time required for maintenance calculating processing device for calculating a time required for maintenance which is necessary for undergoing a vehicle maintenance, provided that the vehicle maintenance is undergone at a predetermined facility; a total time calculating processing device for calculating a total time a driver takes to visit stop-off facilities within a surrounding area of the facility at which the maintenance is undergone on foot and to get back to the facility at which the maintenance is undergone on foot; a comparison processing device for comparing the total time with the time required for maintenance; and a stop-off facility notification processing device for notifying the driver of the stop-off facility which can be visited on foot while the maintenance is undergone on the basis of the comparison result of the total time and the time required for maintenance.

According to the present invention, a total time and a time required for maintenance are compared with each other and information according to the stop-off facility which a driver can visit and come back from on foot while the maintenance is undergone is notified to the driver on the basis of the comparison result of the total time and the time required for maintenance. Therefore, the driver can expect when the driver should get back to a predetermined facility after the driver visits a predetermined stop-off facility which is near the predetermined facility, so that it is possible to improve the convenience of the notification of the stop-off facility. Further, it is possible for the driver to easily determine whether the driver should visit the stop-off facility before the maintenance is finished or after the maintenance is finished.

### BRIEF DESCRIPTION OF THE DRAWINGS

FIG. 1 is a diagram showing an electric vehicle drive control system according to a first embodiment of the present invention.
FIG. 2 is a first flowchart showing an operation of stop-off facility guidance processing means according to the first embodiment of the present invention.
FIG. 3 is a second flowchart showing the operation of stop-off facility guidance processing means according to the first embodiment of the present invention.
FIG. 4 is a mean sojourn time map according to the first embodiment of the present invention.
FIG. 5 is a first diagram showing an example of a stop-off facility guidance screen according to the first embodiment of the present invention.
FIG. 6 is a second diagram showing an example of the stop-off facility guidance screen according to the first embodiment of the present invention.
FIG. 7 is a map of times required for watching/listening media according to a second embodiment of the present invention.

### DESCRIPTION OF THE PREFERRED EMBODIMENTS

An embodiment of the present invention will be described with reference to figures in detail below. A stop-off facility guidance system will be described in case that an electric vehicle as a vehicle, according to the embodiment, a hybrid vehicle travels to a parking area as a predetermined facility and that a battery of the hybrid vehicle is charged as vehicle maintenance.

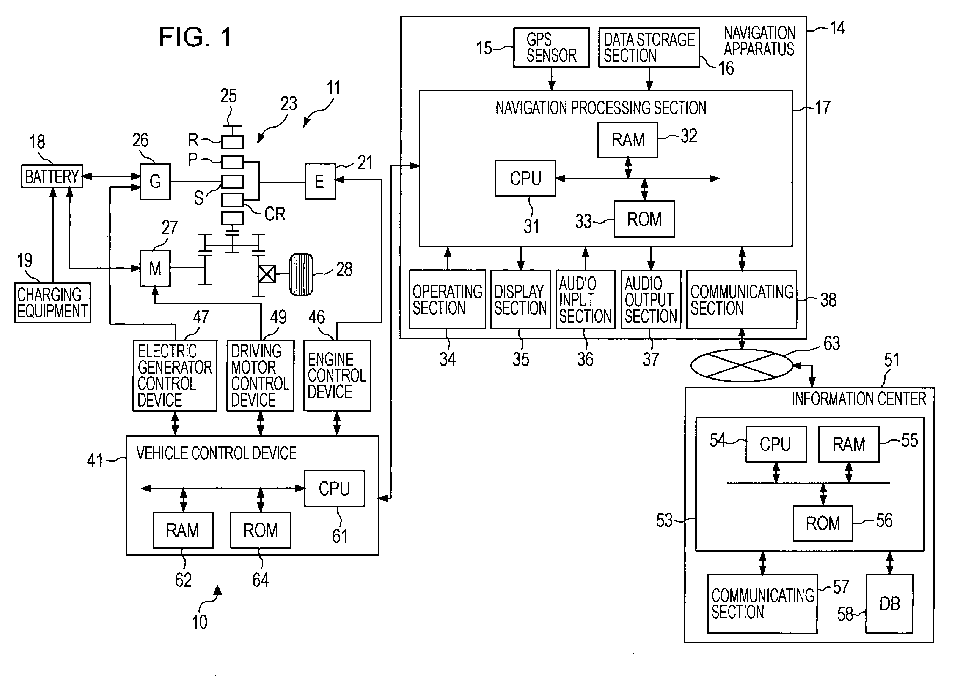

FIG. 1 is a diagram showing an electric vehicle drive control system according to a first embodiment of the current invention.

As shown in FIG. 1, reference numeral 10 denotes an electric vehicle drive control device as a vehicle drive control device. Reference numeral 11 denotes an electric drive device including a drive device for driving a hybrid vehicle. Reference numeral 14 denotes an information terminal such as, for example, a navigation apparatus as an in-vehicle device which is mounted in the hybrid vehicle. Reference numeral 63 denotes a network and reference numeral 51 denotes an information center as an information provider. A navigation system may include the navigation apparatus 14, the network 63, and the information center 51. Further, an electric vehicle drive control system may include the navigation system, the electric vehicle drive control device 10, and the electric drive device 11, and the like. Note that, a stop-off facility guidance system for providing guidance of stop-off facilities may include the electric vehicle drive control system.

The electric drive device 11 may include an engine (E) 21 as a first driving power source, a planetary gear unit 23 for shifting gears by changing the rotation which is transferred from the engine 21 and for allowing torque distribution as a differential rotating device, an output gear 25 for outputting the distributed torque by the planetary gear unit 23, and an electric generator (G) 26 as both a second driving power source which is connected to the planetary gear unit 23 and a first electric machine.

The planetary gear unit 23 may include at least a sun gear S as a first differential element, a pinion P meshing with the sun gear S, a ring gear R meshing with the pinion P as a second differential element, and a carrier CR supporting the pinion P rotatably as a third differential element. The sun gear S is connected to the electric generator 26. The ring gear R is connected to both a driving motor (M) 27, as a third driving power source and a second electric machine, and a driving wheel 28. The carrier CR is connected to the engine 21. The engine 21, the electric generator 26, and the driving motor 27 are connected to each other differential rotatably and mechanically through the planetary gear unit 23 while mechanically connected to the driving wheel 28 as well.

Note that, a one-way clutch (not shown) is mounted between the carrier CR and a case (not shown) of the electric vehicle drive control device 10, so that the inverse rotation is not transferred to the engine 21 because of the one-way clutch.

The electric generator 26 generates electricity using the rotation which is transferred from the planetary gear unit 23. Thereby, the electric generator 26 is connected to a battery 18 as a charging element and provides direct current to the battery 18. In the electric generator 26, an electric generator brake (not shown) is mounted between a rotor (not shown) and the case. The rotor is fixed by engaging with the electric generator brake, so that it is possible to mechanically stop the rotation of the electric generator 26.

Note that, according to the current embodiment, it is possible to charge the battery 18 by supplying midnight power at a facility (point) such as a home and the like in which a predetermined charging equipment 19 is mounted for using commercial electricity. Therefore, an outlet (not shown) is mounted on the charging equipment 19 and a plug (not shown) is mounted on the hybrid vehicle and the battery 18 is connected to the charging equipment 19 by inserting the plug into the outlet. Note that, according to the current embodiment, only the battery 18 is charged. However, for example, a capacitor as a charging element may be charged just as the battery 18.

The electric generator 26 is connected to the battery 18 through an electric generator inverter (not shown). The electric generator inverter converts direct current which is supplied from the battery 18 to phase U, phase V, and phase W, that is, alternating current and transfers alternating current to the electric generator 26. The electric generator 26 is activated in response to this and an electric generator torque which is a torque of the electric generator 26 is generated.

The driving motor 27 is connected to the battery 18 through a driving motor inverter (not shown). The driving motor inverter converts direct current which is supplied from the battery 18 to phase U, phase V, and phase W, that is, alternating current and transfers alternating current to the driving motor 27. The driving motor 27 is activated in response to this and a driving motor torque which is a torque of the driving motor 27 is generated. Note that, for example, while the hybrid vehicle is suspended, electricity which is regenerated by the driving motor 27 may be charged in the battery 18.

Next, the electric vehicle drive control device 10 for controlling the electric drive device 11 will be described below.

The electric vehicle drive control device 10 may include a vehicle control device 41 for controlling the entire hybrid vehicle. The vehicle control device 41 is connected to an engine control device 46 for controlling the engine 21, an electric generator control device 47 for controlling the electric generator 26, and a driving motor control device 49 for controlling the driving motor 27 while being connected to a navigation processing section 17 of the navigation apparatus 14.

The vehicle control device 41 may include a CPU 61, a RAM 62 which is used as a working memory when various types of calculating processing are executed by the CPU 61, and a ROM 64 in which control programs are stored. Each of the engine control device 46, the electric generator control device 47, and the driving motor control device 49 may include the CPU, the RAM, the ROM, and the like (not shown) to control the engine 21, the electric generator 26, or the driving motor 27.

Note that, a first control device which is at a lower level than the vehicle control device 41 may include the engine control device 46, the electric generator control device 47, the driving motor control device 49, and the navigation processing section 17. Similarly, a second control device which is at a higher level than the engine control device 46, the electric generator control device 47, the driving motor control device 49, and the navigation processing section 17 may include the vehicle control device 41.

The navigation apparatus 14 may include a GPS sensor 15 as a current position detecting section for detecting a vehicle position which is a current position of the hybrid vehicle and a vehicle direction which is the direction of the hybrid vehicle, a data storage section 16 as an information storage section for storing various information such as map data (not shown), the navigation processing section 17 for executing various calculation processing such as a navigation processing, an operating section 34 as a first input section for operating a predetermined input by a driver's (a user's) operation, a display section 35 as a first output section for proving various types of display using images which are displayed on a screen (not shown) and notifying the driver of the displays, an audio input section 36 as a second input section for operating a predetermined input by the driver's voice, an audio output section 37 as a second output section for operating audio output and notifying the driver of various information, and a communicating section 38 as a transferring/receiving section which is functioned as a communication terminal. The navigation processing section 17 is connected to the GPS sensor 15, the data storage section 16, the operating section 34, the display section 35, the audio input section 36, the audio output section 37, and the communicating section 38. The GPS sensor 15 detects a time in addition to the vehicle position and the vehicle direction. Note that, the vehicle direction may be detected by a direction sensor which is mounted in addition to the GPS sensor 15.

The data storage section 16 may include a map database (not shown) including map data files and map data is stored in the map database. As map data, intersection data according to intersections (branch points), node data according to nodes, road data according to road links, search data which is modified for a search, facility data according to facilities, and feature data according to features on roads may be included.

The data storage section 16 may further include a statistical database (not shown) including statistical data files and a travel history database (not shown) including travel history data files. Statistical data is stored as past record data in the statistical data files and similarly travel history data is stored as past record data in the travel history data files.

Further, the data storage section 16 may include a disk (not shown) such as a hard disk, a CD, a DVD, or an optical disk for storing various data described above and further include a head (not shown) such as a reading/writing head for reading/writing various data. For example, a memory card may be used as the data storage section 16. Note that, an external storage device may be structured by each of the disks described above and/or the memory card.

According to the current embodiment, the map database, the statistical database, the travel history database, and the like are included in the data storage section 16. However, the map database, the statistical database, the travel history database, and the like may be included in the information center 51.

The navigation processing section 17 may include a CPU 31 as a control device for controlling the entire navigation apparatus 14 and as a calculating device, a RAM 32 which is used as a working memory when the CPU 31 executes various calculating processing, a ROM 33 in which control programs and various programs for operating a route search for a destination, a route guidance, and the like are stored, and a flash memory (not shown) which is used for storing various data and programs.

As the operating section 34, a keyboard or a mouse (not shown) which is mounted in addition to the display section 35 may be used. Further, a touch panel may be used as the operating section 34 for executing predetermined input operations. Specifically, an image operating section such as various types of keys, switches, and/or buttons displayed as an image on a screen of the display section 35, that is, the touch panel, is touched or clicked and the predetermined input operations are executed.

A display may be used as the display section 35. On the display section 35, the vehicle position, the vehicle direction, a map, a route to be searched for, guidance information and traffic information along the searched route, a distance to next intersection along the searched route, and a travel direction at the next intersection may be displayed.

The audio input section 36 may include a microphone (not shown) to input necessary information by voice. The audio output section 37 may include an audio synthesis device and a speaker (not shown) to provide route guidance according to the searched route with audio output.

The communicating section 38 may include a beacon receiver (not shown) for receiving various information such as general information and/or current traffic information which are transferred from a road traffic information center such as a VICS (Vehicle Information and Communication System ®) center and an FM receiver (not shown) for receiving FM multiple broadcasting through an FM broadcasting station. In addition to various information such as general information and traffic information, the communicating section 38 may receive data such as map data, statistical data, travel history data, and the like from the information center 51 through the network 63.

To transfer such data, the information center 51 may include a server 53, a communicating section 57, and a database (DB) 58 as an information storage section. The server 53 may further include a CPU 54, a RAM 55, and a ROM 56. In the database 58, same data as various data which is stored in the data storage section 16 is stored.

Note that, the electric vehicle drive control system, the electric vehicle drive control device 10, the engine control device 46, the electric generator control device 47, the driving motor control device 49, the navigation system, the navigation processing section 17, the server 53, the CPUs 31, 54, and 61 may be functioned as a computer by itself or in combination with two or more than two of them for executing calculating processing on the basis of various programs and data.

A storage device and a storage medium may be structured with the data storage section 16, the RAMs 32, 55, 62, the ROMs 33, 56, 64, and a flash memory. A calculating device may be structured with the CPU 31, 54, and 61. As the calculating device, for example, a MPU may be used instead of the CPU 31, 54, or 61.

Next, basic operations of the navigation apparatus 14 will be described.

First, when a driver operates the operating section 34 and the navigation apparatus 14 is activated in response to this, current position reading processing means (not shown) of the CPU 31 executes a current position reading processing, so that a vehicle position and a vehicle direction which are detected by the GPS sensor 15 are read. Next, vehicle position calculating processing means (not shown) of the CPU 31 executes a vehicle position calculating processing (matching processing), so that the vehicle position is calculated and specified by determining which road link the vehicle position is located on on the basis of the locus of the read vehicle positions and shapes and orders of road links which are formed roads surrounding the vehicle position.

Basic information obtaining processing means (not shown) of the CPU 31 executes a basic information obtaining processing for reading out and obtaining the map data from the data storage section 16 or for receiving and obtaining the map data from, for example, the information center 51 through the communicating section 38. Note that, when the map data is obtained from, for example, the information center 51, the basic information obtaining processing means downloads the received map data onto the flash memory.

Display processing means (not shown) of the CPU 31 executes a display processing for creating various types of screens on the display section 35. For example, map display processing means of the display processing means executes a map display processing, so that a map screen is generated on the display section 35 and a map of a surrounding area, the vehicle position, and the vehicle direction are displayed on the map screen.

Therefore, the driver can drive the vehicle on the basis of the displayed map, the vehicle position, and the vehicle direction.

When the driver inputs a destination by operating the operating section 34, destination setting processing means (not shown) of the CPU 31 executes a destination setting processing for setting the destination. Note that, according to the current embodiment, instead of operating the operating section 34 to input the destination, the driver inputs an activity schedule indicating a travel plan of the hybrid vehicle using a terminal device (not shown) such as an electric personal organizer, a PC, and the like. Therefore, the navigation apparatus 14 may include the communicating section 38 for transferring data with a connector or a PC (not shown) which is for connecting the terminal device.

In the activity schedule, for example, starting points, destinations, scheduled starting times at the starting points, and scheduled arrival times at the destinations are stored by date.

Next, in the navigation apparatus 14, activity schedule obtaining processing means (not shown) of the CPU 31 executes an activity schedule obtaining processing, so that the activity schedule which was input from the terminal device is read and obtained before the hybrid vehicle starts traveling, and the activity schedule, connecting a starting at a home as a first starting point to an arrival to the home as a last destination through each of destinations, is set as a destination schedule.

The destination schedule is set as described above. If needed, the driver inputs search conditions by operating the operating section 34 and search processing means (not shown) of the CPU 31 executes a search processing, so that the vehicle position, the destination schedule, and the like are read, search data and charging facility data of a parking area, an electric station, and the like which includes a charging equipment (hereinafter referred to as "charging facility data") are read out among facility data, a route from the first starting point to the last destination on the destination schedule is searched for according to the search conditions on the basis of the vehicle position, the destination, search data, charging facility data, and the like, and finally the route data is output.

Note that, the searched route is a collection of routes which are from each starting point to each destination on the destination schedule. Route data may include not only data indicating searched routes but data indicating charging facilities which are searched for on the searched routes. According to the search processing, the route which has the minimum total link cost, a link cost is assigned to each road link, is searched for.

According to the current embodiment, the CPU 31 executes the search processing. However, the information center 51 may execute the search processing instead.

Guidance processing means (not shown) of the CPU 31 executes a guidance processing for providing the route guidance. Route display processing means of the guidance processing means executes a route display processing, so that the route data is read in and the searched route is displayed on the map screen on the basis of the read route data.

Meanwhile, the electric generator 26 and the driving motor 27 are activated by electric current which is supplied from the battery 18. In this case, it is preferable to run down the electricity which was charged in the battery 18 before the next charge in terms of a pollution issue and/or an energy-saving problem. However, if the electricity is run down while the hybrid vehicle is traveling, the hybrid vehicle has to travel using only the engine 21 in spite of a HV travel mode and this is not preferable in terms of the pollution issue and/or the energy-saving problem. Further, a vehicle request torque which is necessary for driving the hybrid vehicle cannot be generated enough.

To solve the problems described above, according to the current embodiment, the navigation apparatus 14 sets charging facilities as planned charging points on the basis of the search data and each of ideal battery remaining amounts (SOC) at charging points along the routes between each starting point (at which the battery can be charged) and each planned charging point is set as a target value of the battery remaining amount SOC, that is, a target battery remaining amount SOC* as a target charging capacity. The navigation apparatus 14 calculates the target battery remaining amount SOC* as the target charging capacity.

Energy control determination processing means (not shown) as charging schedule setting processing means of the CPU 31 executes an energy control determination processing as a charging schedule setting processing. As charging conditions, the battery remaining amount SOC as the charging capacity at the first starting point, the distance from the starting point at which the hybrid vehicle can be charged to the planned charging point, a time spent on charging at each planned charging point between the arrival at the point and the departure from the point, that is, a time period which can be spent at the charging point, a time necessary for full-charging the battery 18, that is, a time required for charging, and the like are read in and the travel distance from the starting point at which the vehicle can be charged is calculated on the basis of the charging conditions. Next, the target battery remaining amounts SOC* at each of points are calculated in such a way that the battery remaining amount SOC becomes 0% at the arrival to the next planned charging point. In this way the charging schedule including the target battery remaining amounts SOC* at each of points is set.

Note that, a facility at which maintenance will be undergone, that is, a planned maintenance point is set from the planned charging points. A time which can be spent on the maintenance at each of the planned maintenance points from the arrival at the point to the departure from the point, that is, a maintenance and charging time is set on the basis of the time which can be spent at the charging point. A time period which is necessary for undergoing the maintenance, that is, a time required for the maintenance is set on the basis of the time required for charging.

The battery remaining amount SOC here denotes a value indicating the percentage of the charge amount which is actually charged in the battery 18 against the capacity of the battery 18, that is, the amount of charge remaining in the battery. When the battery 18 is full-charged and the percentage of the charge amount which is actually charged in the battery 18 against the capacity of the battery 18 is 100%, the battery remaining amount SOC is 100%, that is, the battery 18 has been full-charged.

To calculate the battery remaining amount SOC, a battery voltage sensor as a voltage detecting section (not shown) for detecting the battery voltage and a battery current sensor as a current detecting section (not shown) for detecting the battery current may be mounted in the battery 18. The sensor output from the battery voltage sensor and the sensor output from the battery current sensor are supplied to the vehicle control device 41. In response to this, battery remaining amount calculating processing means (not shown) as amount of charge calculating processing means of the vehicle control device 41 executes a battery remaining amount calculating processing as an amount of charge calculating processing for calculating the battery remaining amount SOC.

In this case, the first starting point and the last destination are both the home. The battery 18 is full-charged at the departure at the home, so that the battery remaining amount SOC at that time is 100%, and the battery remaining amount SOC becomes 0% at the arrival at the home. Each of the battery remaining amounts SOC at each of the planned charging points is nearly 0% so as to charge the battery of the vehicle at the planned charging points. Note that, when the time which can be spent at the planned charging point is shorter than the time required for charging, the charging is started as soon as the vehicle arrives at the planned charging point and the charging is terminated when the vehicle leaves from the point. In this case, although the battery remaining amount SOC does not reach 100%, the vehicle goes to the next destination.

Note that, as the battery remaining amount SOC here, 100% and 0% do not indicate the physical remaining amount. 100% and 0% of SOC indicate the highest remaining amount and the lowest remaining amount based on the battery 18's economical, repeated use. Further, the battery remaining amount SOC is different depend on the cause of the performance, the material, and the like of the battery 18. For example, when the battery 18 is an alkaline battery, the battery may be used until the SOC becomes very low. Meanwhile, when the battery 18 is a zinc battery, using the zinc battery until the SOC becomes excessively low causes the battery life to be shortened, so that a state which a predetermined amount of charge is still remaining in the zinc battery is set as 0% of the battery remaining amount SOC for the zinc battery.

As described above, when the charging schedule is set, drive control instruction processing means (not shown) of the CPU 31 executes a drive control instruction processing, so that the charging schedule which is the determination result by the energy control determination processing is notified to the electric vehicle drive control device 10 and the activation of the electric drive device 11 is instructed.

Next, in the electric vehicle drive control device 10, drive control processing means (not shown) of the CPU 61 executes a drive control processing and activates the electric drive device 11 on the basis of the charging schedule.

Next, operations of the drive control processing means will be described.

First, driving condition obtaining processing means of the drive control processing means executes a driving condition obtaining processing, so that a position of an accelerator pedal is read from an accelerator switch which is mounted on the accelerator pedal (not shown) and a position of a brake pedal is read from a brake switch which is mounted on the brake pedal (not shown). Further, a position of a rotor is read from a rotor position sensor (for example, a resolver) (not shown) as a position detecting section which is mounted on the driving motor 27 and the vehicle speed is calculated as a travel condition on the basis of the rotor position. In this case, the accelerator switch and the brake switch are functioned as driving operation amount detecting sections and the rotor position sensor is functioned as a vehicle speed detecting section. Note that, the vehicle speed may be detected by a vehicle speed sensor which is mounted on the output gear 25 as the vehicle speed detecting section.

Vehicle request torque calculating processing means of the drive control processing means executes a vehicle request torque calculating processing, so that a vehicle request torque TO* which is necessary for driving the hybrid vehicle is calculated on the basis of the accelerator pedal position, the brake pedal position, and the vehicle speed.

Next, vehicle request torque determination processing means of the drive control processing means executes a vehicle request torque determination processing, so that it is determined whether the vehicle request torque TO* is greater than a driving motor maximum torque which is a preset maximum driving motor torque as a rating torque of the diving motor 27. When the vehicle request torque TO* is greater than the driving motor maximum torque, abrupt acceleration control processing means of the drive control processing means executes an abrupt acceleration control processing, so that it is determined whether the engine 21 is suspended. When the engine 21 is suspended, the electric generator 26 and the driving motor 27 are activated to make the hybrid vehicle travel in the EV travel mode.

When the vehicle request torque TO* is equal to or less than the driving motor maximum torque or when the vehicle request torque TO* is greater than the driving motor maximum torque while the engine 21 is not suspended, driver request output calculating processing means of the drive control processing means executes a driver request output calculating processing. A driver request output PD is calculated by multiplying the vehicle request torque TO* by the vehicle speed. Battery charge-discharge request output calculating processing means of the drive control processing means executes a battery charge-discharge request output calculating processing. The charging schedule is read from the navigation apparatus 14 while the battery remaining amount SOC is read. Then, a battery charge-discharge request output LSOC is calculated as a charge-discharge request output in such a way that the current battery remaining amount SOC is brought close to the target battery remaining amount SOC* of the charging schedule. Vehicle request output calculating processing means of the drive control processing means executes a vehicle request output calculating processing, so that a vehicle request output PO is calculated by adding the driver request output PD to the battery charge-discharge request output LSOC.

Next, engine target driving condition setting processing means of the drive control processing means executes an engine target driving condition setting processing. An engine target driving condition map which is stored in the ROM 64 is referred to determine a driving point which is a point at which the efficiency of the engine 21 becomes the highest on a most suitable fuel efficiency curve on the basis of the vehicle request output PO, the accelerator pedal position, and the like. The torque of the engine 21 at the determined driving point, that is, an engine torque TE is determined as an engine target torque TE* indicating the target value of the engine torque TE. Further, an engine rotation speed at the determined driving point, that is, an engine rotation speed NE is determined as an engine target rotation speed NE* indicating the target value of the engine rotation speed NE and the engine target rotation speed NE* is transferred to the engine control device 46.

The engine control device 46 refers to an engine drivable range map which is stored in the ROM as a storage device of the engine control device 46 and determines whether the electric drive device 11 is located within a drivable range which is for activating the engine 21 on the basis of the vehicle speed, the battery remaining amount SOC, and the vehicle request torque TO*. In this case, the greater the battery remaining amount SOC is, the narrower the drivable range becomes. Similarly, the smaller the battery remaining amount SOC is, the larger the drivable range becomes.

When the engine 21 is not activated even though the engine 21 is located within the drivable range, engine control processing means (not shown) of the engine control device 46 executes an engine control processing. In this processing, the engine 21 starts to be activated to make the hybrid vehicle travel in the HV travel mode. When the engine 21 is activated even though the engine 21 is not located within the drivable range, the engine control processing means terminates the driving of the engine 21 and makes the hybrid vehicle travel in the EV travel mode.

When the engine 21 is not located within the drivable range and not activated, driving motor target torque calculating processing means of the drive control processing means executes a driving motor target torque calculating processing. The vehicle request torque TO* is calculated as a driving motor target torque TM* indicating the target value of the driving motor torque TM and the calculated driving motor target torque TM* is transferred to the driving motor control device 49. In this case, driving motor control processing means (not shown) as electric machine control processing means of the driving motor control device 49 executes a driving motor control processing as electric machine control processing means for controlling the torque of the driving motor 27.

When the engine 21 is located within the drivable range and activated, the engine control processing means executes the control of the engine 21 using a predetermined method.

Next, electric generator target rotation speed calculating processing means (not shown) of the electric generator control device 47 executes an electric generator target rotation speed calculating processing. Specifically, the electric generator target rotation speed calculating processing means reads the rotor position from the rotor position sensor and calculates the rotation speed of the ring gear R on the basis of the rotor position. At the same time, the engine target rotation speed NE* is read and the rotation speed of the electric generator 26, that is, an electric generator target rotation speed NG* indicating the target value of the electric generator rotation speed NG is calculated on the basis of the rotation speed of the ring gear R and the engine target rotation speed NE* because the rotation speed of the electric generator 26 responds to the engine target rotation speed NE* by a rotation speed's relational expression which is represented by a gear teeth ratio of the sun gear S, the pinion P, and the ring gear R of the planetary gear unit 23.

By the way, when the hybrid vehicle which has the structure described above is driven by using the engine 21 and the driving motor 27 in the HV travel mode, if the electric generator rotation speed NG is low, it requires a measurable amount of power and the power generation efficiency of the electric generator 26 becomes down, so that the fuel efficiency of the hybrid vehicle becomes lower. Therefore, when the electric generator rotation speed NG is low, the brake of the electric generator is engaged and the electric generator 26 is stopped mechanically. As the result, the fuel efficiency becomes better.

When the electric generator target torque TG* indicating the target value of the electric generator torque TG is determined, the electric generator control device 47 controls the torque of the electric generator 26 on the basis of the electric generator target torque TG*. A predetermined electric generator torque TG is generated and an engine torque TE, the torque of the ring gear R, that is, the ring gear torque, and the electric generator torque TG receive reaction forces from each other, so that the electric generator torque TG is converted to the ring gear torque and output from the ring gear R. In this case, the ring gear torque is output from the ring gear R and the electric generator rotation speed NG is changed and further the ring gear torque is changed as well. The changed ring gear torque is transferred to the driving wheel 28, so that the sensation of driving of the hybrid vehicle becomes worse.

The driving motor target torque calculating processing means calculates the ring gear torque in prospect of the torque for inertia of the electric generator 26 depending on the change of the electric generator rotation speed NG and estimates a torque of an output shaft of the driving motor 27, that is, a driving shaft torque on the basis of the ring gear torque. By subtracting the driving shaft torque from the vehicle request torque, the over-short value of the driving shaft torque is calculated as the driving motor target torque TM*.

In the current embodiment described above, according to the driving conditions such as the charging schedule, the acceleration pedal position, the brake pedal position, the vehicle speed, the battery remaining amount SOC, and the like, the hybrid vehicle travels in the EV travel mode by terminating the engine 21 and activating both the electric generator 26 and the driving motor 27 or by terminating both the engine 21 and the electric generator 26 and activating only the driving motor 27. Meanwhile, the hybrid vehicle travels in the HV travel mode by activating both the engine 21 and the driving motor 27 and activating the electric generator 26 to receive the reactive force, or by activating both the engine 21 and the driving motor 27 and mechanically terminating the electric generator 26.

By the way, when a predetermined charging facility, for example, a parking area is set as the planned charging point, guidance of other facilities is provided as well, so that the driver can visit the other facilities while the vehicle is charged at the parking area.

Stop-off facility guidance processing means (not shown) of the CPU 31 executes a stop-off facility guidance processing, so that stop-off facilities are searched for and guidance of the searched facilities is provided to the driver.

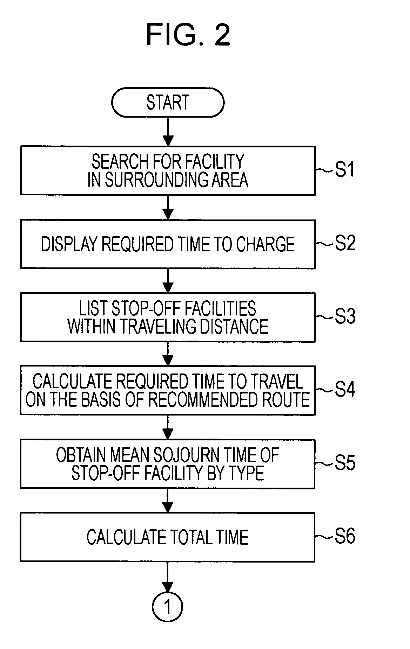

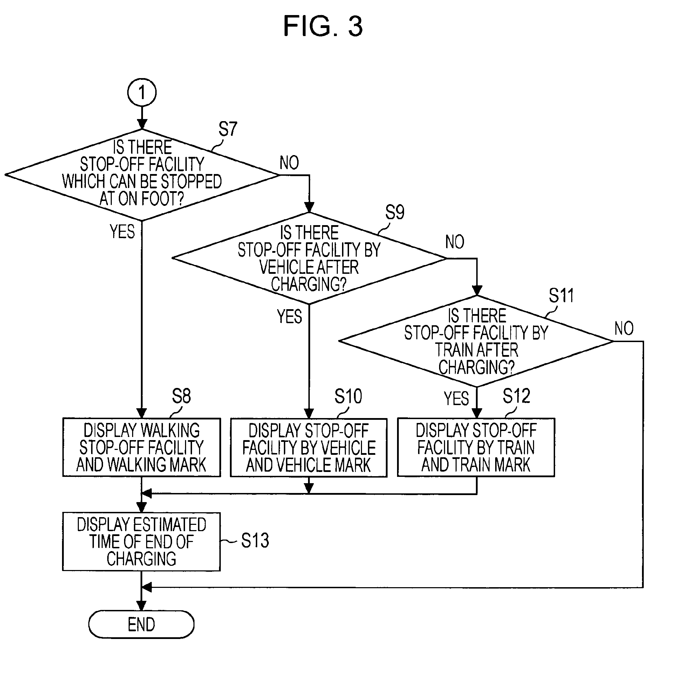

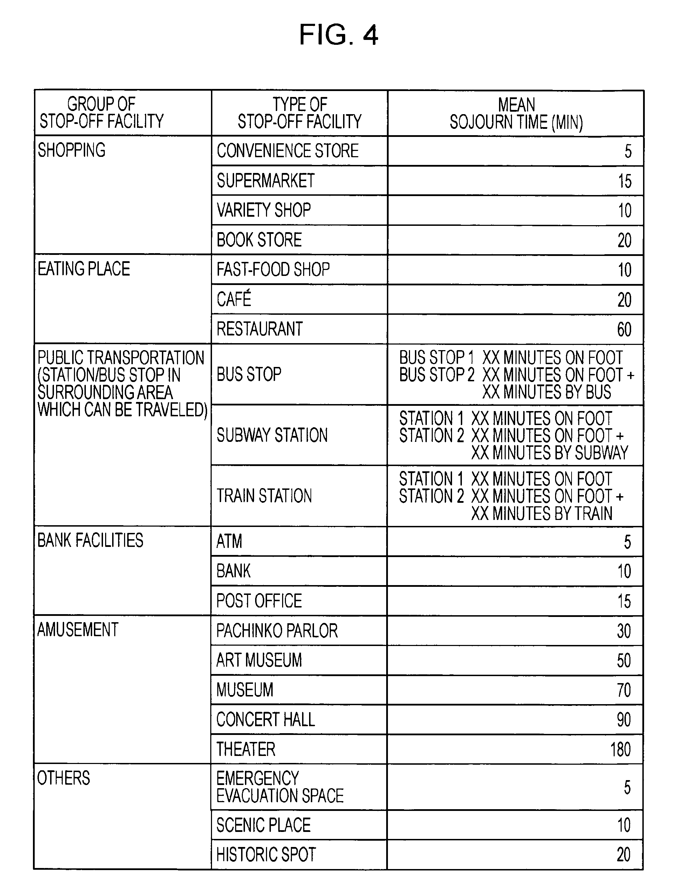

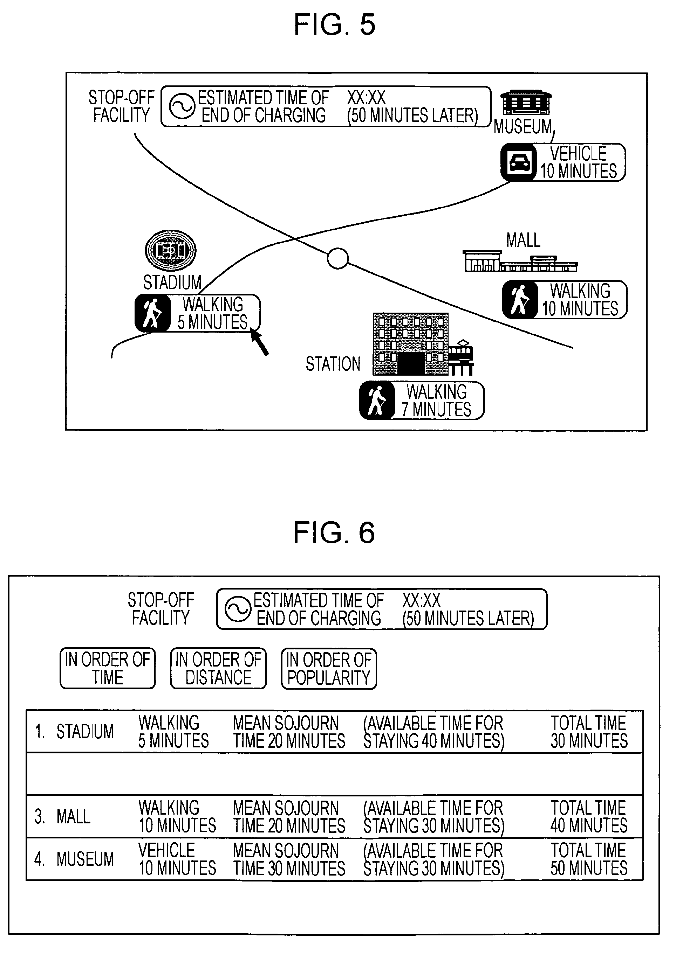

FIG. 2 is a first flowchart showing an operation of stop-off facility guidance processing means according to the first embodiment of the current invention. FIG. 3 is a second flowchart showing an operation of stop-off facility guidance processing means according to the first embodiment of the current invention. FIG. 4 is a mean sojourn time map according to the first embodiment of the current invention. FIG. 5 is a first diagram showing an example of a stop-off facility guidance screen according to the first embodiment of the current invention. FIG. 6 is a second diagram showing an example of the stop-off facility guidance screen according to the first embodiment of the current invention.

Facility within surrounding area search processing means of the stop-off guidance processing means executes a facility within surrounding area search processing to refer to facility data and to search for facilities which are located within an area surrounding a parking area. According to the current embodiment, as stop-off facilities, only facilities within travel distance which can be visited on foot, by the hybrid vehicle, or by train are searched for. In this case, facilities within a range which can be visited on foot (for example, within a 1000-meter radius) are set as walk stop-off facilities. Similarly, facilities within driving distance by the hybrid vehicle (for example, a 20-kilometer radius in case of general roads or a 80-kilometer radius in case of highway) are set as vehicle stop-off facilities and facilities within movable distance by train are set as train stop-off facilities.

Next, time required for charging calculating processing means as time required for maintenance calculating processing means of the stop-off guidance processing means executes a time required for charging calculating processing as a time required for maintenance calculating processing to read the current battery remaining amount SOC and to calculate the time required for charging by the charging equipment at the parking area on the basis of the battery remaining amount SOC. In response to this, the display processing means displays the time required for charging on the display section 35.

The search processing means sets the parking area as the starting point, searches for routes to each of stop-off facilities as the destinations, and sets the searched routes as stop-off routes. Total time calculating processing means of the stop-off guidance processing means executes a total time calculating processing. Specifically, a time which is necessary for visiting a walk stop-off facility on foot from the parking area among the searched stop-off facilities, that is, a walking time as a first travel time, a time which is necessary for visiting a vehicle stop-off facility by the hybrid vehicle from the parking area among the searched stop-off facilities, that is, a vehicle travel time as a second travel time, and a time which is necessary for visiting a train stop-off facility by train from the parking area among the searched stop-off facilities, that is, a train travel time as a third travel time are calculated on basis of each of the stop-off routes.

The total time calculating processing means determines whether a type of the stop-off facility is known. When the type of the stop-off facility is known, the total time calculating processing means refers to the mean sojourn time map which is set in the ROM 33 (FIG. 1) as shown in FIG. 4 and reads out and obtains the mean sojourn times of the stop-off facilities by type. Meanwhile, when the type of the stop-off facility is not known, the total time calculating processing means reads out and obtains a standard means sojourn time (hereinafter referred to as "standard sojourn time") which is uniformly set and stored in, for example, a buffer (not shown) of the CPU 31. According to the current embodiment, the standard sojourn time is stored in the buffer. However, the standard sojourn time may be stored in a predetermined range of the mean sojourn time map separate from the mean sojourn times by type. Note that, in the mean sojourn time map, the stop-off facilities are sorted by group and further by type and the mean sojourn times corresponding to each of the types of the stop-off facilities are sorted and stored. The mean sojourn time map may be set in the data storage section 16, the database 58, and the like instead of the ROM 33.

The total time calculating processing means calculates a round-trip time between the parking area and the stop-off facility by doubling the walking time, the vehicle travel time, or the train travel time. Further, the total time, which is a total time necessary for leaving the parking area, stopping at the stop-off facility, staying at the stop-off facility for the corresponding mean sojourn time, and getting back to the parking area from the stop-off facility, is calculated by adding the calculated round-trip time to the mean sojourn time. In this case, the total times for each of the walk stop-off facilities, the total times for each of the vehicle stop-off facilities, and the total times for each of the train stop-off facilities are calculated.

Comparison processing means of the stop-off guidance processing means executes a comparison processing to compare the total times of each of the walk stop-off facilities with the time required for charging. Stop-off facility extracting processing means of the stop-off guidance processing means executes a stop-off facility extracting processing to determine whether there is any walk stop-off facility whose total time is shorter than the time required for charging on the basis of the comparison result, that is, whether there is any walk stop-off facility which can be visited while the charging. When such the walk stop-off facility which can be visited on foot exists, the display processing means displays the walk stop-off facility and the walking time with a mark indicating that the facility can be visited on foot, that is, a walking mark, on the map as shown in FIG. 5.

When such the walk stop-off facility which can be visited on foot does not exist, the comparison processing means compares the total times of the vehicle stop-off facilities with a first threshold value. The stop-off facility extracting processing means determines whether there is any vehicle stop-off facility whose total time is shorter than the first threshold value on the basis of the comparison result, that is, whether there is any vehicle stop-off facility which can be visited after the charging. When such the vehicle stop-off facility which can be visited, the display processing means displays the vehicle stop-off facility and the vehicle travel time with a mark indicating that the facility can be visited by the hybrid vehicle, that is, a vehicle mark, on the map as shown in FIG. 5.

When such the vehicle stop-off facility which can be visited by the hybrid vehicle does not exist, the comparison processing means compares the total times of each of the train stop-off facilities with a second threshold value. The stop-off facility extracting processing means determines whether there is any train stop-off facility whose total time is shorter than the second threshold value on the basis of the comparison result, that is, whether there is any train stop-off facility which can be visited after the charging. When such the train stop-off facility which can be visited, the display processing means displays the train stop-off facility and the train travel time with a mark indicating that the facility can be visited by train, that is, a train mark, on the map.

Note that, the display processing means displays a planned time of the end of the charging, that is, an expected time of end of charging, on a predetermined area of the screen. The display processing means may further display the mean sojourn times and the available times for staying at the facilities on the map. This means that the display processing means may be structured by stop-off facility notification processing means. The stop-off facility notification processing means executes a stop-off facility notification processing to notify the driver of stop-off facilities which can be visited.

According to the current embodiment, stop-off facility extracting processing means determines whether there is any stop-off facility whose total time is shorter than the time required for charging. When there is such a stop-off facility whose total time is shorter than the time required for charging, the display processing means displays the determined stop-off facility on the map. However, in case of that the driver sets an allowable time in advance, the display processing means may display the stop-off facility whose total time is the allowable time longer than the time required for charging on the map.

As shown in FIG. 6, the stop-off facilities may be displayed in a list form on the display section 35. In this case, for example, the stop-off facilities, the walking times, the vehicle travel times, the train travel times, the mean sojourn times, the available times for staying, the total times, and the like may be displayed. Further, the stop-off facilities may be displayed in ascending order of the total times, in ascending order of the distances to the stop-off facilities, in the order of popularity, and the like.

Note that, it is possible to notify the driver that the charging is terminated at the timing of the end of the charging. In this case, charging termination determination processing means as maintenance termination determination processing means of the stop-off guidance processing means executes a charging termination determination processing as a maintenance termination determination processing to determine whether the charging is terminated. When the charging is terminated, charging termination notification processing means as maintenance termination notification processing means of the stop-off guidance processing means executes a charging termination notification processing as a maintenance termination notification processing to notify the driver that the charging is terminated by, for example, sending a mail to a mobile phone as a communicating device and as a communicating terminal.

As described above, according to the current embodiment, the walk stop-off facility whose total time is shorter than the time required for charging is displayed on the display section 35, so that the driver may predict when he/she should get back to the parking area after visiting the displayed stop-off facility on foot. Therefore, after the driver visited the stop-off facility on foot, this prevents the driver from coming back to the parking area much long before the charging is terminated or from coming back to the parking area much long after the charging has been terminated, so that it is possible to improve the convenience of the display according to the stop-off facility. Further, after the charging is terminated, the vehicle stop-off facilities which can be visited by the hybrid vehicle or the train stop-off facilities which can be visited by train may be displayed on the display section 35, so that it is possible for the driver to easily determine whether the stop-off facility should be visited before the charging is terminated or after the charging is terminated.

Next, a flowchart will be described below.
Step S1: search for facilities within a surrounding area.
Step S2: display the time required for charging.
Step S3: list the stop-off facilities within movable range.
Step S4: calculate times required for traveling on the basis of a recommended route.
Step S5: obtain mean sojourn times of the stop-off facilities by type.
Step S6: calculate the total time.
Step S7: determine whether there is a walk stop-off facility which can be visited on foot. When such the walk stop-off facility which can be visited exists, the procedure goes to Step S8. When there is not such the walk stop-off facility which can be visited, the procedure goes to Step S9.
Step S8: display the walk stop-off facility with the walking mark.
Step S9: determines whether there is a vehicle stop-off facility which can be visited after the charging is terminated. When such the vehicle stop-off facility which can be visited after the charging exists, the procedure goes to Step S10. When there is not such the vehicle stop-off facility, the procedure goes to Step S11.
Step S10: display the vehicle stop-off facility with the vehicle mark.
Step S11: determines whether there is a train stop-off facility which can be visited after the charging is terminated. When such the train stop-off facility which can be visited after the charging exists, the procedure goes to Step S12. When there is not such the train stop-off facility, the procedure is terminated.
Step S12: display the train stop-off facility with the train mark.
Step S13: display the planned time of the end of the charging and this processing is terminated.

According to the current embodiment, the display processing means notifies the driver of the stop-off facilities which can be visited by methods other than on foot after the maintenance is terminated. However, it is possible to notify the driver of the stop-off facilities which can be visited by methods other than on foot before the maintenance is terminated, if needed.

By the way, according to the current embodiment, the total times of each of the walk stop-off facilities are compared with the time required for charging. When there is any walk stop-off facility which can be visited, the walk stop-off facility and the walking time are displayed with the walking mark. When such the walk stop-off facility which can be visited does not exist, the vehicle stop-off facilities and the vehicle travel times are displayed on the map with the vehicle marks and/or the train stop-off facilities and the train travel times are displayed on the map with the train marks. However, when such the walk stop-off facility which can be visited does not exist, it is possible to provide the guidance of programs which can be watched/listened within the time required for charging.

Next, a second embodiment of the current invention in which the guidance of programs which can be watched/listened within the time required for charging is provided, provided that a walk stop-off facility which can be visited does not exist, will be described below.

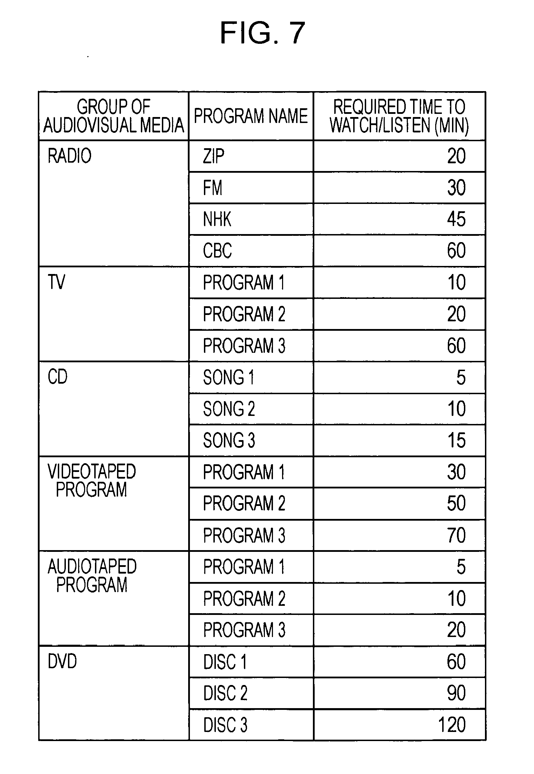

FIG. 7 is a diagram showing a map of times required for watching/listening media according to the second embodiment of the current invention.

In this case, when it is determined that such the walk stop-off facility which can be visited does not exist, media guidance processing means (not shown) of the CPU 31 executes a media guidance processing. A map of times required for watching/listening media which is set in the ROM 33 is referred to as shown in FIG. 7 and programs which can be watched/listened within the time required for charging are searched for. The display processing means displays the searched programs which can be watched/listened on the display section 35. In this case, the display processing means may include program to be watched/listened notification processing means, so that the program to be watched/listened notification processing means executes a program to be watched/listened notification processing to notify the driver of programs which can be watched/listened.

The present invention is not limited to the embodiment as described above, and may be improved and modified into various forms without departing from the scope of the present invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A stop-off facility guidance system, comprising:
time required for maintenance calculating processing means for calculating a time required for maintenance which is necessary for undergoing a vehicle maintenance, provided that the vehicle maintenance is undergone at a predetermined facility;
total time calculating processing means for calculating a total time a driver takes to visit stop-off facilities within a surrounding area of the facility at which the maintenance is undergone on foot and to get back to the facility at which the maintenance is undergone on foot;
comparison processing means for comparing the total time with the time required for the maintenance; and
stop-off facility notification processing means for notifying the driver of the stop-off facility which can be visited on foot while the maintenance is undergone on the basis of the comparison result of the total time and the time required for the maintenance.

2. The stop-off facility guidance system of Claim 1, wherein the total time calculating processing means calculates the total time on the basis of times required for traveling between the facility at which the maintenance is undergone and the stop-off facilities on foot and mean sojourn times at the stop-off facilities.

3. The stop-off facility guidance system of Claim 1 or 2, wherein the stop-off facility notification processing means notifies the driver of the stop-off facility which can be visited on foot, provided that the total time is shorter than the time required for the maintenance.

4. The stop-off facility guidance system of any of Claims 1 to 3, wherein the stop-off facility notification processing means displays the stop-off facilities and marks indicating that the stop-off facilities can be visited on a map.

5. The stop-off facility guidance system of any of Claims 1 to 4, wherein the stop-off facility notification processing means displays the stop-off facilities in a list form.

6. The stop-off facility guidance system of any of Claims 1 to 5, comprising:
media guidance processing means for providing a guidance of programs which can be watched/listened within the time required for the maintenance.

7. The stop-off facility guidance system of any of Claims 1 to 6, wherein the stop-off facility notification processing means notifies the driver of the stop-off facilities which can be visited by methods other than on foot.

8. A stop-off facility guidance method, comprising:
calculating a time required for a maintenance which is necessary for undergoing the maintenance, provided that the vehicle maintenance is undergone at a predetermined facility;
calculating a total time a driver takes to visit stop-off facilities which are within a surrounding area of the facility at which the maintenance is undergone on foot and to get back to the facility at which the maintenance is undergone on foot;
comparing the total time with the time required for the maintenance; and
notifying the driver of stop-off facilities which can be visited on foot while the maintenance is undergone on the basis of the comparison result of the total time and the time required for the maintenance.
